# FASCICULE DE BREVET EUROPEEN

(11) **EP 3 722 128 B1**
(45) Date de publication et mention de la délivrance du brevet: **15.12.2021**
(21) Numéro de dépôt: 20167128.6
(22) Date de dépôt: 31.03.2020
(51) Int. Cl.: B60J 5/04, B60J 5/10

(54) **ENSEMBLE DE CAISSON DE HAYON ET DE PEAU DE HAYON AMÉLIORÉ**
VERBESSERTE EINHEIT AUS HECKKLAPPENGEHÄUSE UND HECKKLAPPENVERKLEIDUNG
IMPROVED TAILGATE BOX ASSEMBLY AND TAILGATE SKIN

(30) Priorité: 11.04.2019 FR 1903901
(43) Date de publication de la demande: 14.10.2020
(73) Titulaire: Compagnie Plastic Omnium, 69007 Lyon (FR)
(72) Inventeur: LETERRIER, Franck, 01150 Sainte-Julie (FR); BARBIER, Pascal, 01150 Sainte-Julie (FR)
(74) Mandataire: LLR

(56) Documents cités:
- EP-A1- 3 034 339
- WO-A1-2016/016578
- WO-A1-2017/042703

## Description

L'invention concerne le domaine des hayons en plastique de véhicule automobile, et plus particulièrement un ensemble de caisson de hayon et d'une peau de hayon obtenus par moulage.

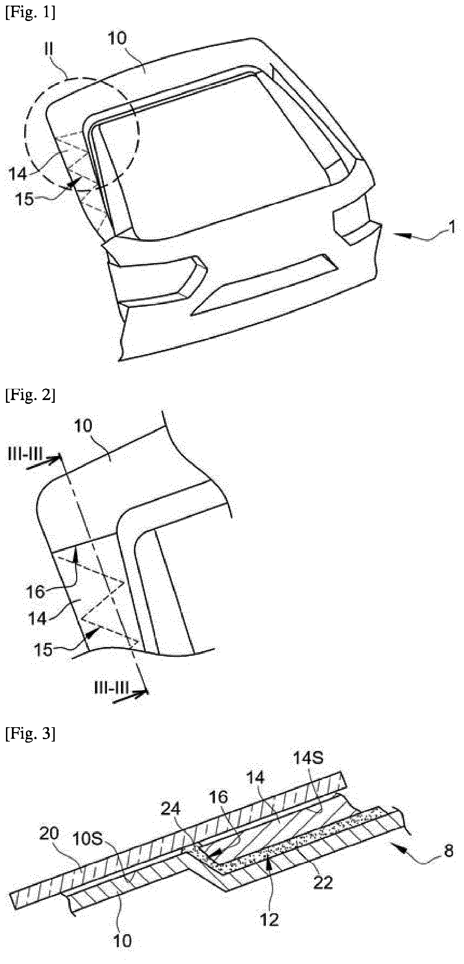

On a représenté à la figure 1 un hayon pouvant être trouvé dans la plupart des véhicules automobiles. Un tel hayon 1 comprend un ensemble 8 constitué d'une part d'un caisson de hayon 10, également appelé doublure, pièce structurelle la plus résistante et formant la paroi située du côté de l'habitacle du véhicule, et d'autre part d'au moins une peau 14, rapportée sur le caisson et formant la paroi du hayon située vers l'extérieur du véhicule. Sur cet ensemble 8 est rapportée une lunette transparente, fixée le plus souvent par collage, voir par exemple WO2017/042703 A1. La rigidité et la résistance structurelle indispensables au caisson 10 sont obtenues par des renforts moulés venus de matière, constitués de formes ou de nervures localisées qui imposent de fortes contraintes à la conception du moule.

Dans certains modèles de véhicules, une ou plusieurs peaux de carrosserie peuvent également rapportées par collage sur le caisson avant la pose de la lunette pour former le hayon. Une telle configuration est notamment rencontrée dans le cas où le caisson de hayon est réalisé par moulage d'une matière plastique, et où la géométrie souhaitée par le constructeur ainsi que les renforts (poutres, nervures, etc.) à y intégrer génèrent des formes complexes 15 (représentées en pointillées sur la figure 1) non démoulables « naturellement », c'est-à-dire qui ne permet pas un retrait sans l'aide d'un mécanisme adapté, par exemple un tiroir.

La présence des formes complexes 15 précitées empêche la réalisation d'un caisson de hayon en une pièce continue, car elle impliquerait un mécanisme de moulage trop compliqué pour respecter les cadences et/ou les coûts de fabrication recherchés dans un cadre industriel. Il est donc nécessaire de les recouvrir par une peau 14.

Dans les configurations évoquées ci-dessus, et comme illustré aux figures 2 et 3 illustrant l'art antérieur, un caisson de hayon 10 est destiné à recevoir, dans un logement 12 (non visible sur la figure 1) pratiqué dans le caisson de hayon 10, la peau de hayon 14 qui y rapportée par collage. Le logement 12, les formes du caisson de hayon 10 et la peau de hayon 14 sont configurés de sorte qu'une surface extérieure 14S de la peau de hayon affleure, de façon jointive, une surface extérieure 10S du caisson, dans une zone de jonction 16 de la peau de hayon 14 et du caisson de hayon 10. Ces surfaces extérieures respectives 10S, 14S du caisson et de la peau de hayon servent par la suite de support à une piste de collage sur laquelle est rapportée une lunette 20 de hayon. Le cordon de colle permettant le collage de la lunette 20 constitue ainsi à la fois la fixation et l'étanchéité vis-à-vis de l'extérieur entre la lunette 20 et le caisson de hayon 10.

Cependant, il arrive qu'au moment du collage de la peau de hayon 14 sur le caisson 10, la colle 22 d'assemblage de la peau de hayon 14 au caisson 10 ne se répartisse pas de façon homogène dans le logement 12. En particulier, il se peut qu'un excédent de colle s'accumule au niveau de la zone de jonction 16, de sorte à former une surépaisseur locale 24, comme illustré aux figures 2 et 3 illustrant également l'art antérieur.

Dans pareil cas, comme on peut le voir à la figure 3, la lunette 20 ne sera pas, au niveau de la zone de jonction 16, en appui plan sur une surface formée par la réunion des surfaces extérieures 10S, 14S, mais en appui ponctuel la surépaisseur 24. Ceci peut entraîner un mauvais positionnement de la lunette 20, une fragilité structurelle, voire un défaut d'étanchéité au niveau de la zone de jonction 16.

Pour éviter ce genre de situation, il peut être prévu de retirer l'excédent de colle servant à assembler la peau de hayon 14 au caisson 10. Toutefois, cela représente une opération manuelle coûteuse et peu fiable.

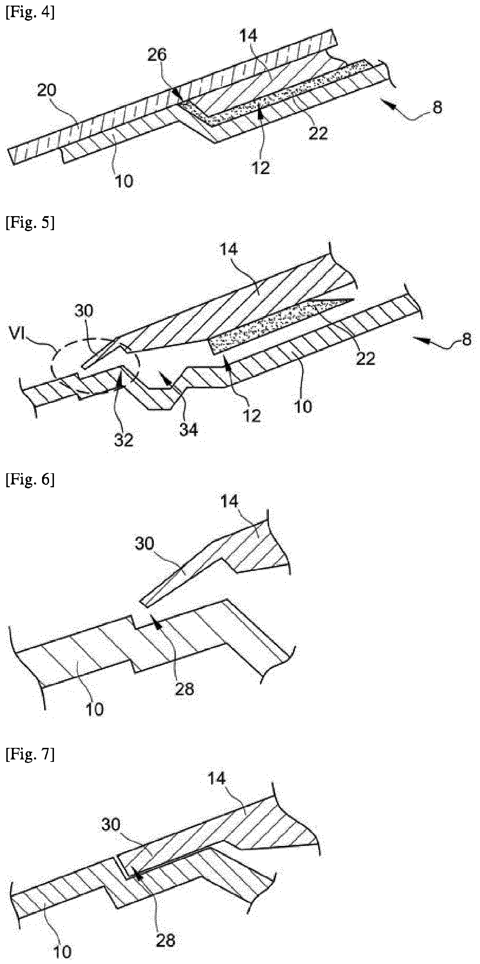

A l'inverse, dans d'autres cas, comme on peut le voir à la figure 4, il se peut qu'un déficit de colle d'assemblage 22 apparaisse dans la zone de jonction 16, créant un renfoncement 26. Là encore, ceci peut entraîner un défaut d'étanchéité du collage de la lunette au niveau de la zone de jonction 16.

L'invention a donc pour but d'éviter que les excédents ou déficits de colle ne soient présents dans la zone de jonction 16 entre le caisson de hayon 10 et la peau de hayon 14 une fois ceux-ci assemblés, et limiter ainsi les défauts de positionnement de la lunette et/ou d'étanchéité dans cette région.

A cet effet, l'invention a pour objet un ensemble d'un caisson de hayon de véhicule automobile et d'une peau de hayon destinée à être fixée sur le caisson de hayon par collage, le caisson de hayon comprenant un logement destiné à recevoir la peau de hayon,
caractérisé en ce que la peau de hayon est munie d'une lèvre de rétention venue de matière avec la peau de hayon formant un prolongement de la peau de hayon et constituant un amincissement de la peau de hayon, le logement pratiqué dans le caisson de hayon comprenant un épaulement de rétention définissant une cavité d'emboîtement destinée à recevoir la lèvre de rétention, de forme complémentaire à celle de la lèvre de rétention, la cavité d'emboîtement et la lèvre de rétention étant configurées de sorte qu'une fois emboîtée dans la cavité d'emboîtement, la lèvre de rétention forme un opercule fermant la cavité d'emboîtement et affleurant de façon jointive une surface externe du caisson de hayon.

Grâce au fait que la peau de hayon soit munie d'une lèvre de rétention formant un prolongement de la peau de hayon, et que le logement pratiqué dans la surface extérieure du caisson comprenne un épaulement de rétention définissant une cavité d'emboîtement destinée à recevoir la lèvre de rétention, de sorte que la lèvre de rétention forme un opercule fermant la cavité et affleurant de façon jointive une surface externe du caisson de hayon, lors de l'assemblage par collage de la peau de hayon au caisson, la colle est bloquée par l'épaulement et la lèvre de rétention au niveau de la jonction entre la peau de hayon et le caisson. La colle est ainsi retenue dans le logement et ne pénètre pas la zone de jonction.

En outre, la lèvre de rétention constitue un élément de liaison entre la peau de hayon et le caisson de hayon. Elle forme en effet un pont entre ces deux éléments qui s'étend dans la zone de jonction.

On limite ainsi grandement les risques qu'un excès ou un déficit de colle, qui nuirait à un bon assemblage de la lunette sur le caisson et la peau de hayon, ne soit présent au niveau de ladite jonction. En d'autres termes, la lèvre de rétention emboîtée dans la cavité d'emboîtement forme soit un couvercle assurant la rétention de la colle dans le logement en cas d'excédent (Fig.3) soit un pont à jeu réduit entre la peau et le caisson en cas de manque de colle (Fig.4).

Selon un mode de réalisation préféré de l'invention, la lèvre de rétention est apte à se déformer élastiquement lors de son emboîtement dans la cavité d'emboîtement.

Selon l'invention, pour en simplifier la fabrication, la lèvre de rétention est venue de matière avec la peau de hayon.

Selon l'invention, la lèvre de rétention constitue un amincissement de la peau de hayon, ce qui facilite sa déformation élastique.

De préférence, afin d'alléger le hayon, la peau de hayon est réalisée en matériau plastique, par exemple du polypropylène chargé de fibres de verre.

Dans ce cas, la lèvre de rétention est avantageusement venue de moulage avec la peau de hayon pour en faciliter la fabrication.

De préférence, la peau de hayon étant localement sensiblement plane, la lèvre de rétention s'étend, avant assemblage, selon une direction sensiblement longitudinale inclinée par rapport au plan selon lequel s'étend la peau de hayon. Ainsi, lors de son insertion dans la cavité d'emboîtement, elle subit une force de rappel qui fait qu'elle aura tendance à se redresser, ce qui sera favorable au collage de la lunette.

Selon un mode de réalisation particulier de l'invention, le logement comprend en outre un réservoir de rétention adjacent à l'épaulement de rétention apte à piéger la colle utilisée lors de l'assemblage de la peau de hayon sur le caisson de hayon. Le réservoir de rétention forme un piège permettant de recueillir un éventuel excès de colle inséré dans le logement, et de limiter encore les risques que la colle ne forme une surépaisseur au niveau de la jonction entre le caisson de hayon et la peau de hayon.

L'invention a également pour objet un procédé d'assemblage d'une peau de hayon à un caisson de hayon de véhicule automobile selon l'invention, comprenant les étapes suivantes, de préférence dans cet ordre :
- application de colle le long d'une piste de collage sur une surface de la peau de hayon ou dans le logement,
- déplacement de la peau de hayon vers le logement du caisson de hayon ou inversement,
- positionnement de la lèvre de rétention dans la cavité d'emboîtement par déformation de la lèvre de rétention,
- insertion de la peau de hayon dans le logement,
- application de pression sur la peau de hayon de manière à provoquer la mise en contact continue du cordon de colle entre la peau de hayon et le caisson de hayon.

L'invention a également pour objet un véhicule automobile comprenant un ensemble d'un caisson de hayon de véhicule automobile et d'une peau de hayon selon l'invention.

### Brève description des figures

L'invention sera mieux comprise à la lecture de la description qui va suivre donnée uniquement à titre d'exemple et faite en se référant aux dessins annexés dans lesquels :
[fig.1] (art antérieur) est une vue en perspective d'un ensemble d'un caisson de hayon de véhicule et d'une peau de hayon selon l'art antérieur ;
[fig.2] (art antérieur) est une vue du détail II de la figure 1 ;
[fig.3] (art antérieur) est une vue en coupe selon la ligne III-III de l'ensemble de la figure 2 selon une première configuration de l'art antérieur ;
[fig.4] (art antérieur) est une vue similaire à la figure 3 selon une deuxième configuration de l'art antérieur ;
[fig.5] est une vue similaire à la figure 2 d'un ensemble d'un caisson de hayon de véhicule et d'une peau de hayon selon un premier mode de réalisation de l'invention avant assemblage de la peau de hayon au caisson ;
[fig.6] est une vue du détail VI de la figure 5 ;
[fig.7] est une vue similaire à la figure 6 une fois la peau de hayon assemblée au caisson ;
[fig.8] est une vue similaire à la figure 5 une fois la peau de hayon assemblée au caisson de hayon et la lunette assemblée à l'ensemble formé du caisson de hayon et de la peau de hayon.

### Description détaillée

On a représenté à la figure 5 un ensemble 8 d'un caisson de hayon de véhicule 10 et d'une peau de hayon 14 selon un mode de réalisation particulier de l'invention. Cet ensemble 8 a un aspect extérieur similaire à celui représenté à la figure 1 illustrant l'art antérieur.

Tout comme dans l'art antérieur, la peau de hayon 14 selon l'invention est destinée à être rapportée sur le caisson de hayon 10 par collage. A cet effet, le caisson de hayon 10 comprenant un logement 12 destiné à recevoir la peau de hayon 14. Le collage se fait à l'aide d'une colle réalisée de préférence à base de polyuréthane (PU).

Dans l'ensemble 8 selon l'invention, la peau de hayon 14 est munie d'une lèvre de rétention 30 formant un prolongement local situé au bord de la peau de hayon 14.

Dans l'exemple représenté sur les figures, la lèvre de rétention 30 est de forme sensiblement plane.

La lèvre de rétention 30 est ici venue de matière avec la peau de hayon 14, ce qui évite de rapporter un élément supplémentaire sur la peau de hayon 14 ou, lorsque la peau de hayon est moulée à partir d'un matériau plastique, de réaliser une bi-injection de matière.

De préférence, lorsque la peau de hayon 14 est réalisée partir d'un matériau plastique tel que du polypropylène chargé de fibres de verre, la lèvre de rétention 30 est venue de moulage avec la peau de hayon 14, ce qui simplifie grandement sa fabrication.

On notera que la lèvre de rétention 30 est destinée à être présente sur la peau de hayon 14 au niveau d'une zone de jonction 16 entre la peau de hayon et le caisson de hayon.

Le logement 12 pratiqué dans le caisson de hayon 10 comprend un épaulement de rétention 32 définissant une cavité d'emboîtement 28 destinée à recevoir la lèvre de rétention 30. La cavité d'emboîtement 28 est de forme complémentaire à celle de la lèvre de rétention 30.

Dans le mode de réalisation représenté sur les figures 5 à 8, la cavité d'emboîtement constitue un renfoncement ménagé dans le caisson de hayon 10.

La cavité d'emboîtement 28 et la lèvre de rétention 30 sont configurées de sorte qu'une fois emboîtée dans la cavité d'emboîtement 28, la lèvre de rétention 30 forme un opercule fermant la cavité d'emboîtement 28 et affleurant de façon jointive une surface externe 10S du caisson de hayon.

La lèvre de rétention 30 est apte à se déformer élastiquement lors de son insertion dans la cavité d'emboîtement 28. Cette aptitude à la déformation peut être obtenu en réalisant la lèvre de rétention 30 à partir d'un matériau plastique élastique.

Selon l'invention, et ainsi qu'illustré aux figures 5 à 7, la capacité de déformation élastique de la lèvre de rétention 30 est obtenu du fait que la lèvre de rétention 30 constitue un amincissement local de la peau de hayon 14.

Pour une peau de hayon 14 d'épaisseur maximale comprise entre 3 et 4 mm, par exemple 3,2 mm, l'épaisseur maximale de la lèvre 30 est avantageusement comprise entre 0,2 et 1 mm, de préférence 0,4 à 0,8mm. On notera que la lèvre peut être d'épaisseur constante ou d'épaisseur variable, c'est-à-dire avoir un profil variable. De préférence, la lèvre 30 s'amincit depuis son extrémité en regard de la peau de hayon 14, qui dans le cadre du mode de réalisation de la figure est son pied de rattachement à la peau de hayon 14, vers son extrémité libre.

De ce fait, la cavité d'emboîtement 28 constitue par exemple un renfoncement d'une profondeur d'environ 0,5mm pratiquée dans le caisson de hayon 10.

Comme on peut le voir en particulier à la figure 6, la peau de hayon 14 étant localement sensiblement plane, la lèvre de rétention 30 s'étend, avant assemblage, selon une direction sensiblement longitudinale inclinée par rapport au plan selon lequel s'étend la peau de hayon 10. Plus précisément, l'extrémité libre de la rétention 30 est orientée vers le logement 12, et plus particulièrement vers la cavité d'emboîtement 28.

Dans un mode réalisation particulier de l'invention, le logement 12 comprend en outre un réservoir de rétention 34 adjacent à l'épaulement de rétention 32 apte à piéger la colle 22 utilisée lors de l'assemblage de la peau de hayon 14 sur le caisson de hayon 10. Le réservoir de rétention 34 est par exemple une cavité adjacente à l'épaulement 32. On notera que la présence du réservoir de rétention 34, même s'il est représenté sur le mode de réalisation illustré par les figures, est optionnelle.

On va maintenant décrire un procédé de montage d'un ensemble 8 d'un caisson de hayon 10 de véhicule automobile et d'une peau de hayon 14 selon l'invention.

Au cours d'une première étape, on applique la colle 22 le long d'une piste de collage sur une surface de la peau de hayon 14 ou du caisson de hayon 10.

On rapproche ensuite la peau de hayon 14 et le logement 12 du caisson de hayon 10, ou inversement, la surface de la peau de hayon 14/du caisson de hayon 10 sur laquelle a été appliquée la colle 22 étant en regard du logement 12/de la peau de hayon 14.

On positionne l'extrémité de la lèvre inclinée en regard de l'épaulement.

Puis, on insère la lèvre de rétention 30 dans la cavité d'emboîtement 28 par déformation de la lèvre de rétention 30.

On insère ensuite le reste de la peau de hayon 10 dans le logement 12.

Enfin, on applique, de façon classique et connue de l'homme du métier, une pression sur la peau de hayon 10 de manière à provoquer la mise en contact de la peau de hayon 14 au caisson de hayon 10.

Une fois l'ensemble 8 assemblé, on dépose un cordon de colle sur la lunette 36, par exemple une colle polyuréthane (PU) pour assembler la lunette 24 sur les surfaces extérieures du caisson de hayon 10S et de la peau de hayon 14S, ou inversement.

On rapporte ensuite la lunette de hayon 20 sur cette piste de collage 36 avant d'appliquer une pression sur la lunette de hayon 20 de manière à provoquer son adhésion sur la peau de hayon 14 et le caisson de hayon 10 ainsi assemblés.

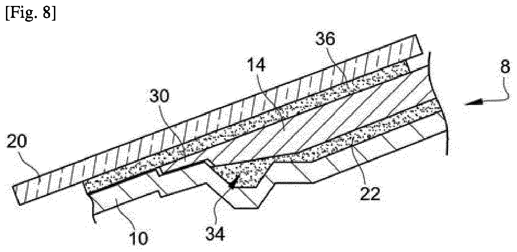

Le résultat de cette opération est représenté à la figure 8.

L'invention n'est pas limitée aux modes de réalisation présentés et d'autres modes de réalisation dans l'étendue de la protection déterminée par les revendications apparaîtront clairement à l'homme du métier.

### Liste des références

- 8 :: ensemble de caisson de hayon et de peau de hayon
- 10 :: caisson de hayon
- 10S :: surface extérieure du caisson de hayon
- 12 :: logement 14 : peau de hayon
- 14S :: surface extérieure de la peau de hayon
- 15 :: formes complexes
- 16 :: zone de jonction entre la peau de hayon et le caisson de hayon
- 20 :: lunette du hayon
- 22 :: colle d'assemblage de la peau au caisson
- 24 :: surépaisseur de colle
- 26 :: renfoncement
- 28 :: cavité d'emboîtement
- 30 :: lèvre de rétention
- 32 :: épaulement de rétention
- 34 :: réservoir de rétention
- 36 :: cordon de colle de la lunette

## Revendications

1. Ensemble (8) d'un caisson de hayon (10) de véhicule automobile et d'une peau de hayon (14) destinée à être rapportée sur le caisson de hayon (10) par collage, le caisson de hayon (10) comprenant un logement (12) destiné à recevoir la peau de hayon (14),
**caractérisé en ce que** la peau de hayon (14) est munie d'une lèvre de rétention (30) venue de matière avec la peau de hayon (14) formant un prolongement de la peau de hayon (14) et constituant un amincissement de la peau de hayon (14),
le logement (12) pratiqué dans le caisson de hayon (10) comprenant un épaulement de rétention (32) définissant une cavité d'emboîtement (28) destinée à recevoir la lèvre de rétention (30), de forme complémentaire à celle de la lèvre de rétention (30),
la cavité d'emboîtement (28) et la lèvre de rétention (30) étant configurées de sorte qu'une fois emboîtée dans la cavité d'emboîtement (28), la lèvre de rétention (30) forme un opercule fermant la cavité d'emboîtement (28) et affleurant de façon jointive une surface externe (10S) du caisson de hayon.

2. Ensemble (8) selon la revendication 1, dans lequel la lèvre de rétention (30) est apte à se déformer élastiquement lors de son emboîtement dans la cavité d'emboîtement (28).

3. Ensemble (8) selon l'une quelconque des revendications précédentes, dans lequel la peau de hayon (10) est réalisée en matériau plastique, par exemple du polypropylène chargé de fibres de verre.

4. Ensemble (8) selon la revendication 3, dans lequel la lèvre de rétention (30) est venue de moulage avec la peau de hayon (14).

5. Ensemble (8) selon l'une quelconque des revendications précédentes, dans lequel, la peau de hayon (10) étant localement sensiblement plane, la lèvre de rétention (30) s'étend, avant assemblage, selon une direction sensiblement longitudinale inclinée par rapport au plan selon lequel s'étend la peau de hayon (14).

6. Ensemble (8) selon l'une quelconque des revendications précédentes, dans lequel le logement (12) comprend en outre un réservoir de rétention (34) adjacent à l'épaulement de rétention (32) apte à piéger la colle (22) utilisée lors de l'assemblage de la peau de hayon (14) sur le caisson de hayon (10).

7. Procédé de montage d'un ensemble (8) d'un caisson de hayon (10) de véhicule automobile et d'une peau de hayon (14) selon la revendication 1, comprenant les étapes suivantes, de préférence dans cet ordre :
- application de colle (22) le long d'une piste de collage sur une surface de la peau de hayon (14) ou dans le logement (12),
- déplacement de la peau de hayon (14) vers le logement (12) du caisson de hayon (10) ou inversement,
- insertion de la lèvre de rétention (30) dans la cavité d'emboîtement (28) par déformation de la lèvre de rétention (30),
- insertion de la peau de hayon (14) dans le logement (12),
- application de pression sur la peau de hayon (14) de manière à provoquer la mise en contact de la peau de hayon (14) au caisson de hayon (10).

8. Véhicule automobile comprenant un ensemble (8) selon l'une quelconque des revendications 1 à 6.

## Patentansprüche

1. Anordnung (8) aus einem Heckklappengehäuse (10) eines Kraftfahrzeugs und einer Heckklappenverkleidung (14), die dazu bestimmt ist, durch Kleben an dem Heckklappengehäuse (10) befestigt zu werden, wobei das Heckklappengehäuse (10) eine Aufnahme (12) aufweist, die dazu bestimmt ist, die Heckklappenverkleidung (14) aufzunehmen,
**dadurch gekennzeichnet, dass** die Heckklappenverkleidung (14) mit einer Rückhaltelippe (30) versehen ist, die einstückig mit der Heckklappenverkleidung (14) ausgebildet ist, eine Verlängerung der Heckklappenverkleidung (14) bildet und eine Verschlankung der Heckklappenverkleidung (14) darstellt,
die Aufnahme (12) in dem Heckklappengehäuse (10) eine Rückhalteschulter (32) aufweist, die einen Passungshohlraum (28) zur Aufnahme der Rückhaltelippe (30) begrenzt, der komplementär zur Form der Rückhaltelippe (30) ist,
der Passungshohlraum (28) und die Rückhaltelippe (30) so konfiguriert sind, dass die Rückhaltelippe (30), wenn sie in den Passungshohlraum (28) eingepasst ist, eine Abdeckung bildet, die den Passungshohlraum um (28) verschließt und bündig mit einer Außenfläche (108) des Heckklappengehäuses ist.

2. Anordnung (8) nach Anspruch 1, wobei die Rückhaltelippe (30) eingerichtet ist, sich beim Einsetzen in den Passungshohlraum (28) elastisch zu verformen.

3. Anordnung (8) nach einem der vorhergehenden Ansprüche, wobei die Heckklappenverkleidung (10) aus einem Kunststoffmaterial, z.B. glasfasergefülltem Polypropylen, hergestellt ist.

4. Anordnung (8) nach Anspruch 3, wobei die Rückhaltelippe (30) einstückig mit der Heckklappenverkleidung (14) ausgebildet ist.

5. Anordnung (8) nach einem der vorhergehenden Ansprüche, wobei die Heckklappenverkleidung (10) örtlich im Wesentlichen eben ist und die Rückhaltelippe (30) sich vor der Montage in einer im Wesentlichen längsgerichteten Richtung erstreckt, die zu der Ebene geneigt ist, in der sich die Heckklappenverkleidung (14) erstreckt.

6. Anordnung (8) nach einem der vorhergehenden Ansprüche, wobei die Aufnahme (12) ferner ein Rückhaltebecken (34) neben der Rückhalteschulter (32) aufweist, das dazu eingerichtet ist, den bei der Montage der Heckklappenverkleidung (14) am Heckklappengehäuse (10) verwendeten Klebstoff (22) einzufangen.

7. Verfahren zum Zusammenbau einer Anordnung (8) aus einem Kraftfahrzeug-Heckklappengehäuse (10) und einer Heckklappenverkleidung (14) nach Anspruch 1, aufweisend die folgenden Schritte, vorzugsweise in dieser Reihenfolge
- Auftragen von Klebstoff (22) entlang einer Klebespur auf eine Oberfläche der Heckklappenverkleidung (14) oder in die Aufnahme (12),
- Bewegen die Heckklappenverkleidung (14) in die Aufnahme (12) des Heckklappengehäuses (10) oder umgekehrt,
- Einsetzen der Rückhaltelippe (30) in die Buchse (28) durch Verformen der Rückhaltelippe (30),
- Einsetzen der Heckklappenverkleidung (14) in die Aufnahme (12),
- Ausüben von Druck auf die Heckklappenverkleidung (14), so dass die Heckklappenverkleidung (14) das Heckklappengehäuse (10) berührt.

8. Kraftfahrzeug mit einer Anordnung (8) nach einem der Ansprüche 1 bis 6.

## Claims

1. Assembly (8) of a tailgate box (10) of a motor vehicle and a tailgate skin (14) intended to be attached to the tailgate box (10) by gluing, the tailgate box (10) comprising a housing (12) intended to receive the tailgate skin (14),
**characterized in that** the tailgate skin (14) is provided with a retention lip (30) integral with the tailgate skin (14) forming an extension of the tailgate skin (14) and constituting a thinning of the tailgate skin (14),
the housing (12) provided in the tailgate box (10) including a retention shoulder (32) defining a nesting cavity (28) for receiving the retention lip (30), complementary in shape to the retention lip (30),
the nesting cavity (28) and the retention lip (30) being configured such that once nested in the nesting cavity (28), the retention lip (30) forms a cover plate closing the nesting cavity (28) and flush with an outer surface (10S) of the tailgate box.

2. Assembly (8) according to claim 1, wherein the retention lip (30) is capable of elastic deformation when nested into the nesting cavity (28).

3. Assembly (8) according to any one of the preceding claims, wherein the tailgate skin (10) is made of plastic material, for example glass-filled polypropylene.

4. Assembly (8) according to claim 3, wherein the retention lip (30) is integrally formed with the tailgate skin (14).

5. Assembly (8) according to any one of the preceding claims, wherein, the tailgate skin (14) being locally substantially flat, the retention lip (30) extends, before assembly, in a substantially longitudinal direction inclined with respect to the plane in which the tailgate skin (14) extends.

6. Assembly (8) according to any one of the preceding claims, wherein the housing (12) further comprises a retention reservoir (34) adjacent the retention shoulder (32) adapted to trap the adhesive (22) used during assembly of the tailgate skin (14) to the tailgate box (10).

7. A method of assembling an assembly (8) of a motor vehicle tailgate box (10) and a tailgate skin (14) according to claim 1, comprising the following steps, preferably in this order:
- applying adhesive (22), along an adhesive track, to a surface of the tailgate skin (14) or into the housing (12),
- moving the tailgate skin (14) towards the housing (12) of the tailgate box (10) or vice versa,
- inserting the retaining lip (30) into the nesting cavity (28) by deforming the retaining lip (30),
- inserting the tailgate skin (14) into the housing (12),
- applying pressure to the tailgate skin (14) so as to cause the tailgate skin (14) to contact the tailgate box (10).

8. Motor vehicle comprising an assembly (8) according to any one of claims 1 to 6.
